# EUROPÄISCHE PATENTSCHRIFT

(11) **EP 3 055 085 B1**
(45) Veröffentlichungstag und Bekanntmachung des Hinweises auf die Patenterteilung: **30.08.2017**
(21) Anmeldenummer: 14805485.1
(22) Anmeldetag: 01.10.2014
(51) Int. Cl.: B21D 39/02, B21D 39/04

(54) **VORRICHTUNG UND VERFAHREN ZUR HERSTELLUNG EINER ANORDNUNG, WELCHE EIN BAUTEIL MIT EINER ISOLIERUNG ENTHÄLT**
APPARATUS AND METHOD FOR PRODUCING AN ARRANGEMENT WHICH CONTAINS A COMPONENT WITH AN INSULATION
DISPOSITIF ET PROCÉDÉ PERMETTANT DE PRODUIRE UN ENSEMBLE QUI CONTIENT UNE PIÈCE MUNIE D'UNE ISOLATION

(30) Priorität: 09.10.2013 DE 102013016663; 29.11.2013 DE 102013017971
(43) Veröffentlichungstag der Anmeldung: 17.08.2016
(73) Patentinhaber: BDD Beteiligungs GmbH, 68169 Mannheim (DE)
(72) Erfinder: EPPEL, Markus, 67105 Schifferstadt (DE); FRUEH, Jochen, 69469 Weinheim (DE)
(74) Vertreter: Wesch, Arno
(86) Internationale Anmeldenummer: PCT/EP2014/002863
(87) Internationale Veröffentlichungsnummer: WO 2015/051922

(56) Entgegenhaltungen:
- EP-B1- 2 088 293
- DE-U1- 8 517 513
- DE-U1-202013 004 290

## Beschreibung

Die Erfindung bezieht sich auf eine Vorrichtung zur Herstellung einer Anordnung gemäß den im Oberbegriff des Patentanspruchs 1 angegebenen Merkmalen. Ferner bezieht sich die Erfindung auf ein Verfahren zur Herstellung einer derartigen Anordnung gemäß dem Oberbegriff des Anspruchs 13. Aus der DE 85 17 513 U1 ist bereits eine Vorrichtung zum Schließen einer Falzverbindung entlang einer Teilfuge zwischen zwei Teilschalen aus Blech bekannt.

Aus der DE 42 10 691 C1 ist eine derartige Vorrichtung bekannt, welche zum Ummanteln von Abgasrohren mit Halbschalen einer Isolierung ausgebildet ist und einen Grundkörper bzw. ein Unterwerkzeug mit einer Aufnahme der unteren Halbschale enthält. Ein in einer vertikalen Bewegungsrichtung zum Unterwerkzeug bewegbares Oberwerkzeug enthält einen Werkzeugträger mit einem Niederhalter für die obere Halbschale sowie einen Nachdrückstempel und ferner einen Vordrückstempel, welcher eine geneigt verlaufende Vorfalzbahn aufweist. Die Verformung der Falzränder erfolgt durch Bewegung des über dem Unterwerkzeug angeordneten oberen Werkzeugträgers samt dessen Komponenten in der Bewegungsrichtung nach unten. Das Unterwerkzeug enthält keine bewegbaren Komponenten, wie einen bewegbar angeordneten Stempel zur Aufnahme der Unterhalbschale samt Auflageflächen für die Falzränder und keine in radialer Richtung bewegbare Schieber mit Ausnehmungen zur Verformung und Herstellung von Falzverbindungen.

Ferner ist aus der EP 2 088 293 B1 ein Verfahren zur Herstellung einer derartigen Anordnung bekannt, deren Bauteil insbesondere als Abgasrohr oder Krümmer einer Verbrennungsmaschine bzw. eines Motors ausgebildet ist und von einem heißen Medium, nämlich Abgas, durchströmbar ist. Das Bauteil ist zumindest teilweise von einer Isolierung zwecks thermischer und/oder akustischer Dämmung umgeben. Das Bauteil ist durch ein Gießverfahren gefertigt, in dessen Außenfläche Ausnehmungen unter Entfernung einer Zunderhaut eingebracht werden. Die Isolierung ist korrespondierend zu den genannten Ausnehmungen mit Ausprägungen versehen und derart auf dem Bauteil angeordnet, dass die Ausprägungen in die Ausnehmungen des Bauteils eingreifen, wobei nachfolgend durch Schweißen im Bereich der Ausprägungen und Ausnehmungen eine feste Verbindung der Isolierung auf dem Bauteil hergestellt wird. Das Bauteil und die Isolierung werden in unterschiedlichen Produktionsstätten an verschiedenen Orten gefertigt, wobei das Bauteil von der einen Produktionsstätte zur anderen Produktionsstätte der Isolierung transportiert werden muss, um dort mit der Isolierung verbunden zu werden. Nachfolgend muss das mit der Isolierung versehene Bauteil wieder zurück zur Weiterverarbeitung bzw. den Einbau, beispielsweise in ein Kraftfahrzeug, transportiert werden, so dass insgesamt ein nicht unerheblicher Aufwand hinsichtlich Transport, Logistik usw. besteht.

Hiervon ausgehend liegt der Erfindung die Aufgabe zugrunde, eine Vorrichtung und/oder ein Verfahren vorzuschlagen, um den Fertigungsaufwand zu vereinfachen und insbesondere den Aufwand hinsichtlich des Hin- und Her-Transports zu minimieren. Die Vorrichtung soll einen geringen konstruktiven Aufwand erfordern und/oder das Verfahren zur Herstellung der Anordnung und/oder der Verbindung der Isolierung mit dem Bauteil sollen in einfacher Weise durchführbar sein. Des Weiteren soll vor allem im Hinblick auf hohe Stückzahlen, wie beispielsweise in der Kraftfahrzeugtechnik oder im Motorenbau die Herstellung mit gleich bleibender und/oder reproduzierbarer Qualität durchführbar sein. Ferner soll die Vorrichtung ein geringes Gewicht und/oder Bauvolumen aufweisen und problemlos handhabbar sein.

Die Lösung dieser Aufgabe erfolgt hinsichtlich der Vorrichtung gemäß den im Patentanspruch 1 angegebenen Merkmalen. Hinsichtlich des Verfahrens erfolgt die Lösung gemäß dem auf das Verfahren gerichteten Patentanspruch 13. Die erfindungsgemäße Vorrichtung zeichnet sich durch eine einfache und funktionsgerechte Konstruktion aus und ermöglicht problemlos die Herstellung einer funktionssicheren Falz-Verbindung der das Bauteil umgebenden Isolierung. Die Vorrichtung enthält in einem Grundkörper einen integrierten und in einer vorgegebenen Richtung verschiebbar gelagerten Stempel, welcher eine an die Kontur des Bauteils und/oder der Isolierung angepasste Ausnehmung zur teilweisen Aufnahme des Bauteils samt Isolierung enthält, welche oben an wenigstens einer als Auflagefläche für den wenigstens einen Steg der herzustellenden Falzverbindung endet. In einer Grundposition nach dem Einbringen der Anordnung in die Ausnehmung des Stempels ist dieser derart im Grundkörper positioniert, dass die Auflagefläche für den Steg des unteren Formteils in der gleichen Ebene liegt wie eine Oberfläche des Grundkörpers. In vorteilhafter Weise befindet sich hierbei die Oberfläche des Grundkörpers direkt radial nach außen anschließend an die Auflagefläche und/oder Oberfläche des Stempels.

Des Weiteren weist die Vorrichtung einen oder mehrere integrierte und verschlebbar gelagerte Schieber auf, mittels welchen ein Stegteil derart gebogen werden kann, dass der zugeordnete andere Steg im Bereich einer Kante oder Längskante der Isolierung eingeklemmt werden kann, wobei infolge einer mittels des Stempels durchgeführten Bewegung des Bauteils mit der umgebenden Isolierung der Falz verschlossen und dauerhaft verpresst wird. Der oder die Schieber enthalten eine Ausnehmung, welche unten von der Oberfläche des Grundkörpers begrenzt ist und in Richtung zur Isolierung und/oder zur Längsachse des Grundkörpers offen ausgebildet ist. Der oder die Schieber sind auf dem Grundkörper, zweckmäßig auf und/oder im Bereich dessen Oberfläche mittels Führungselementen bewegbar gelagert. In der Grundposition befindet sich eine Vorderfläche des Schiebers in einem derartigen Abstand zum Bauteil und/oder dessen Außenfläche und/oder dessen außen angeordneter Folie, dass der Stempel an der Vorderfläche mit seinem oberen Erdbereich nach oben vorbei bewegbar ist.

Nach dem Einbringen der Anordnung in die Ausnehmung des Stempels werden zunächst der oder die seitlich auf dem Grundkörper angeordneten Schieber bewegt, um einen äußeren Teil des zweiten Steges und/oder des unteren Formteils in Richtung zur Längsachse umzubiegen. Nachfolgend wird der Stempel zur Vervollständigung der Falzverbindung und/oder Falzverbindungen vertikal nach oben bewegt.

Die Vorrichtung ist erfindungsgemäß transportabel und/oder als ein autonomes transportables Gerät und/oder als ein Tischgerät ausgebildet und kann auf einem Tisch, einer Werkbank, einem Untergestell oder dergleichen aufgestellt werden. Die Vorrichtung zeichnet sich ferner durch ein geringes Gewicht und/oder Bauvolumen aus und/oder ist problemlos handhabbar. Es ist besonders vorteilhaft, dass die Formteile und/oder Halbschalen mit dem Dämmmaterial und der Folie in einer Produktionsstätte vorgefertigt werden können und nachfolgend in einer anderen Produktionsstätte zusammen mit dem Bauteil mittels der Vorrichtung unter Herstellung der Falzverbindung oder Verbindungen fertig gestellt werden kann.

Mittels der Vorrichtung können Bauteile und Isolierungen, insbesondere Integraldämmungen, mit gerader Längsachse ebenso verbunden werden wie Bauteile und somit Isolierungen mit teilweise oder vollständig gebogenen Längsachsen. Erfindungsgemäße Vorrichtungen können problemlos für die jeweiligen Bauteile und Isolierungen und/oder deren Design und/oder deren Außengeometrie ausgebildet werden. Die Bewegungen des oder der Schieber sowie des Stempels werden bevorzugt mittels pneumatischen oder hydraulischen Antriebseinheiten durchgeführt, und im Rahmen der Erfindung können diese Bewegungen auch mittels manuell betätigbaren Einheiten mit Hebeln, Gestängen oder dergleichen durchgeführt werden. Nach Herstellung der Falz-Verbindung bzw. Falz-Verbindungen kann in bevorzugter Weise die Isolierung im Bereich wenigstens einen Endes mit dem Bauteil insbesondere mittels einer Schweißvorrichtung und/oder durch Punktschweißen verbunden und festgelegt werden.

Die Vorrichtung ermöglicht in besonders vorteilhafter Weise die Herstellung der Verbindung in der gleichen Produktionsstätte oder im gleichen Werk, in welchem das Bauteil hergestellt wird und/oder weiterverarbeitet wird, beispielsweise wo ein Kraftfahrzeugmotor hergestellt und/oder montiert wird. Das Bauteil muss nicht mehr zur Produktionsstätte der Isolierung transportiert und von dort wieder zurücktransportiert werden. Von der Produktionsstätte der Isolierung muss diese nur noch zur Produktionsstätte oder zum Montagewerk des Bauteils angeliefert werden, um dort mittels der Vorrichtung die Verbindung der Isolierung mit dem Bauteil durchzuführen. Mittels der erfindungsgemäßen Vorrichtung können Isolierungen vollständig an einem einzelnen und/oder dem gleichen Arbeitsplatz montiert werden, wobei eine weitere Bearbeitung an einer zusätzlichen Presse oder Maschine nicht erforderlich sind, um die Falzverbindung herzustellen und/oder die Isolierung zu schließen. In der Produktionsstätte des Herstellers der Isolierungen werden diese gefertigt und/oder geformt und/oder als Formteile hergestellt und nachfolgend an einen Kunden und/oder dessen Produktionsstätte geliefert. Es sei ausdrücklich darauf hingewiesen, dass die Isolierungen ein wesentlich geringeres Gewicht als die Bauteile aufweisen, welche üblicherweise aus Guss und/oder, insbesondere bei Ausbildung als Rohre, aus Stahl und Edelstahlblech bestehen. Vor Ort beim Kunden und/oder dessen Produktionsstätte wird die Isolierung auf das Bauteil montiert und mittels der erfindungsgemäßen Vorrichtung wird die Falz-Verbindung hergestellt.

Weiterbildungen und besondere Ausgestaltungen der Erfindung sind in den Unteransprüchen und der nachfolgenden Beschreibung eines Ausführungsbeispiels angegeben. Die Erfindung wird anhand des in der Zeichnung dargestellten besonderen Ausführungsbeispiels näher erläutert, ohne dass insoweit eine Beschränkung erfolgt. Gleiche oder einander entsprechende Komponenten sind mit übereinstimmenden Bezugszeichen in den verschiedenen Figuren versehen, und die zugehörigen Erläuterungen gelten analog für die anderen Figuren. Es zeigen in schematischen Darstellungen:
Fig. 1 in einer explosionsartigen Darstellung vor dem Zusammenbau die zwei Formkörper enthaltende Isolierung sowie das als Rohr ausgebildete Bauteil,
Fig. 2 einen Schnitt durch die Vorrichtung, in welcher das Bauteil samt den beiden Formkörpern eingesetzt ist, wobei zwei Schieber in einer Ausgangsposition dargestellt sind,
Fig. 3 einen Schnitt ähnlich Fig. 2, wobei die genannten Schieber in einer zum Bauteil bzw. der Isolierung hin verschobenen Position dargestellt sind,
Fig. 4 das Detail A gemäß Fig. 2,
Fig. 5 das Detail B gemäß Fig. 3,
Fig. 6 einen Schnitt gemäß Fig. 3, wobei mittels eines Stempels das Bauteil samt Isolierung in Richtung zu den Schiebern verschoben ist,
Fig. 7 das Detail C gemäß Fig. 6.

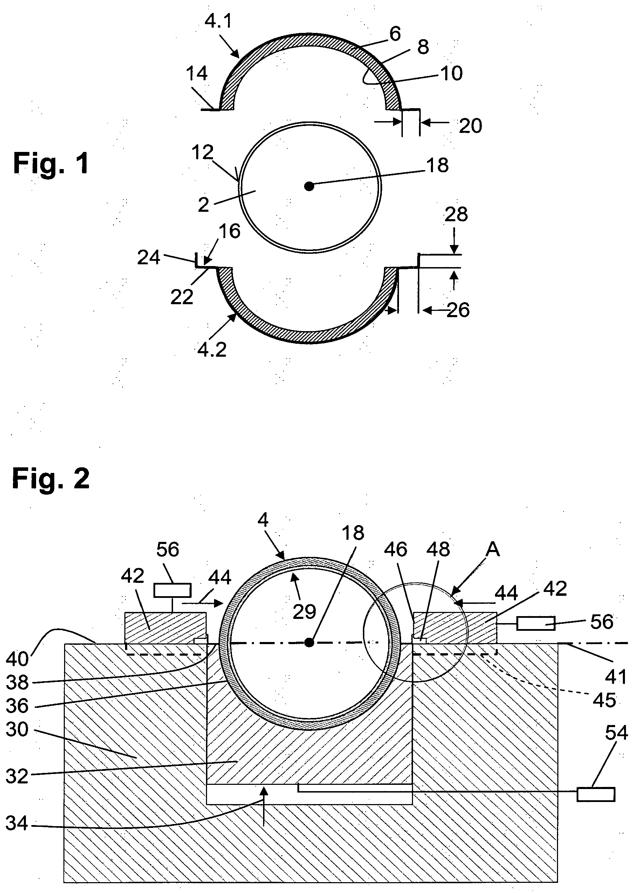

Gemäß Fig. 1 ist dem als Rohr ausgebildeten Bauteil 2 die als Formkörper ausgebildete Isolierung 4 zugeordnet, welche zwei Teile 4.1 und 4.2 enthält. Die Isolierung 4 ist bevorzugt als Integraldämmung ausgebildet und enthält dem Bauteil 2 zugewandt Dämmmaterial 6, welches außen von einer Folie 8, insbesondere aus Edelstahl, umgeben und mit dieser verbunden ist. Die Isolierung und/oder das Dämmmaterial 6 besitzt eine Innenkontur 10, welche an die Außenkontur 12 des Bauteils 2 angepasst und/oder auf diese abgestimmt ist. In den einander zugeordneten Verbindungsbereichen an den Kanten der hier als Halbschalen ausgebildeten Formteile 4.1 und 4.2 weisen die Folien 8 einen ersten Steg 14 und einen zweiten Steg 16 auf. Die ersten Stege 14 sind derart nach außen gerichtet, dass sie nach dem Zusammenfügen auf dem Rohr 2, bezogen auf dessen Längsachse, im Wesentlichen radial nach außen gerichtet sind. Die Stege 14 weisen eine vorgegebene Breite 20 auf. Die zugeordneten zweiten Stege 16 des zweiten Formteils 4.2 sind im Wesentlichen L-förmig ausgebildet und enthalten, bezogen auf die Längsachse 18, einen ebenfalls im Wesentlichen radial ausgerichteten Teil 22 und einen äußeren Teil 24, welcher im Wesentlichen in einem rechten Winkel angeordnet ist und in Richtung zum Formteil 4.1 verläuft. Der radiale Teil 22 besitzt eine Breite 26, welche zumindest näherungsweise der Stegbreite 20 entspricht, und zwar derart, dass nach dem Aufschieben oder Aufbringen der Formkörper 4.1 und 4.2 auf das Bauteil 2 im Bereich der einander zugewandten und/oder zugeordneten Längskanten der erste Steg 14 am zweiten Steg 16 anliegt. Der äußere Stegteil 24 besitzt eine Höhe 28, welche näherungsweise gleich groß ist wie die Breite 26 des radialen Teils 22 und/oder derart, dass nach einem Umbiegen, wie nachfolgend erläutert, eine Falz-Verbindung mit dem ersten Steg 14 des Formkörpers 4.1 vorhanden ist und insgesamt der Falz verschlossen und verpresst ist.

Es sei hier ausdrücklich darauf hingewiesen, dass die Isolierung anstelle der dargestellten zweiteiligen Ausbildung auch einteilig ausgebildet sein kann, wobei die Isolierung eine hinreichende Flexibilität dahingehend besitzt, dass sie quer zur Längsachse des Bauteils 2 über dieses geschoben und derart zusammengedrückt werden kann, dass an den einander zugeordneten Rändern oder Längskanten der Isolierung ein einziger erster Steg 14 sowie ein einziger zweiter Steg 16 vorhanden sind, welche mit nur einer Falz-Verbindung miteinander mittels der Vorrichtung verbunden werden. Des Weiteren kann im Rahmen der Erfindung, insbesondere bei Bauteilen mit vergleichsweise großen Außenabmessungen, die Isolierung auch dreiteilig oder mehrteilig ausgebildet sein, wobei die Vorrichtung entsprechend ausgebildet ist. Ferner sei festgehalten, dass die Längsachse des Bauteils und/oder der Isolierung nicht nur gemäß der Zeichnung gerade sein kann, sondern ganz oder teilweise gebogen sein kann. Das Bauteil 2 und die Isolierung 4 mit dem oder den Formteil(en) 4.1, 4.2 bilden die Anordnung, welche mittels der erfindungsgemäßen Vorrichtung durch Falzen der Stege hergestellt und/oder komplettiert wird.

Gemäß Fig. 2 enthält die Vorrichtung einen Grundkörper 30, in welchem ein Stempel 32 in Richtung des Pfeiles 34 nach oben bewegbar gelagert angeordnet ist. Der integrierte Stempel 32 enthält eine Ausnehmung 36, deren Konturen der Außenkontur der Isolierung 4 angepasst sind. Wie dargestellt, ist in die Ausnehmung 36 die Isolierung 4, welche das Bauteil 2 umgibt, derart eingelegt, dass in dieser Grundposition die Längsachse 18 bevorzugt im Wesentlichen in der gleichen Ebene 41 liegt wie eine Oberfläche 38 des Stempels 32 und bevorzugt auch die Oberfläche 40 des Grundkörpers 30. Die Oberfläche oder Oberflächen 38 sind die Auflagefläche(n) der Stege 16 und 14. Hierbei liegen die beiden zweiten Stege 16 auf den Oberflächen und/oder Auflageflächen 38 des Stempels 32 auf. Die Längsachse 43 der Ausnehmung 36 liegt in dieser Grundposition ebenfalls in der Ebene 41 der Oberfläche 40. An die Auflageflächen 38 schließen zu beiden Seiten die Oberflächen 40 des Grundkörpers 30 unmittelbar an. Im Bereich der Oberfläche 40 des Grundkörpers 30 und/oder in und/oder auf diesem sind zu beiden Seiten des von der Isolierung 4 umgebenen Bauteils 2 Schieber 42 in Richtung der Pfeile 44 und/oder zur Längsachse 18 und/oder zur Achse 43 des Stempels 32 bzw. der Ausnehmung 36 in Führungselementen und/oder Lagerungen 45 bewegbar gelagert. Die Führungselemente und/oder Lagerungen 45 der Schieber 42 und/oder die Bewegungsrichtung sind bevorzugt für Linearbewegungen ausgelegt, wobei im Rahmen der Erfindung andere Bewegungsarten und Richtungen, beispielsweise Schwenkbewegungen, möglich sind.

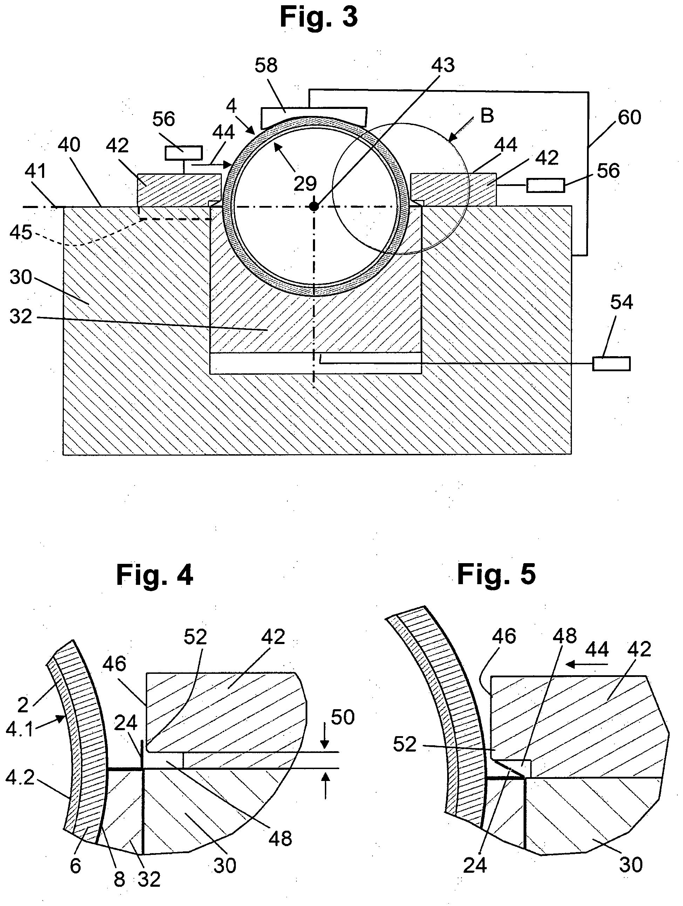

Wesentlich ist, dass in der dargestellten Grundposition des Stempels 32 und der Schieber 42 das Bauteil mit der Isolierung 4 derart einlegbar ist, dass die äußeren Teile 24 der zweiten Stege 16 an einer Vorderfläche 46 des jeweiligen Schiebers 42 vorbei bewegbar sind, wie in dem vergrößerten Detail A gemäß Fig. 4 dargestellt. Der Schieber 42 enthält eine zum Grundkörper 30 hin und/oder dem Grundkörper 30 zugeordnete Ausnehmung 48 mit einer Höhe 50. Erfindungsgemäß ist die Höhe 50 um einen vorgegebenen Betrag kleiner als die Höhe 28 des zweiten Stegs 16 und zwar derart, dass der, gemäß Fig. 4, untere Eckbereich 52 der Vorderfläche 46 teilweise neben dem äußeren Teil 24 sich befindet bzw. diesem zugeordnet ist.

Wie in Fig. 2 schematisch angedeutet, ist dem Stempel 32 eine erste Antriebseinheit 54 zugeordnet, und/oder mit jenem gekoppelt. Weitere Antriebseinheiten 56 sind jeweils den Schiebern 42 zugeordnet und/oder mit jenen gekoppelt. Die Antriebseinheiten 44, 46 sind bevorzugt als hydraulische oder pneumatische Antriebseinheiten ausgelegt. Zur Steuerung der Antriebseinheiten 44, 56 bzw. zur Durchführung der verschiedenen Verfahrensschritte ist in vorteilhafter Weise ein gemeinsames Steuergerät vorgesehen, welches hier nicht weiter dargestellt ist. Wie bereits erwähnt, können alternativ die Antriebseinheiten für manuelle Betätigungen ausgebildet sein, beispielsweise in Form von Hebeln, Gelenkverbindungen, Gestängen und dergleichen.

Fig. 3 und das gemäß Fig. 5 vergrößert dargestellte Detail B zeigen die Vorrichtung nach einem Verfahrensschritt, gemäß welchem die Schieber 42 mittels der zugehörigen Antriebseinheiten 56 in Richtung der Pfeile 44 bewegt worden sind. Hierbei wurde der äußere Teil 24 mittels des Schiebers 42 und/oder dem Eckbereich 52 derart verbogen und/oder umgelegt, dass er sich innerhalb der Ausnehmung 48 in einer geneigten oder schrägen Position befindet. Es sei ausdrücklich darauf hingewiesen, dass die Ausnehmung 48 eine Breite, und zwar bevorzugt im Wesentlichen orthogonal zur Vorderfläche 46 derart aufweist, dass der äußere Teil 24 in die Ausnehmung 48 einschiebbar ist und/oder von der Ausnehmung 48 aufgenommen werden kann.

In vorteilhafter Weise ist ferner eine Sicherungsvorrichtung 58 für die Anordnung 29, insbesondere deren Formteil 4.1 vorgesehen, um deren Abheben nach oben und/oder seitliches Verrutschen insbesondere bei der seitlichen Bewegung des Schiebers 42 zu vermeiden, wobei die Sicherungsvorrichtung 58 oben auf der Anordnung 29 zur Anlage bringbar ist und entfernbar ist. Die Sicherungsvorrichtung 58 ist mittels einer Kopplungseinrichtung 60 mit dem Grundkörper 30 bewegbar derart verbunden, dass diese einerseits zur Anlage und/oder Abstützung der Anordnung in die dargestellte Position bringbar ist und andererseits entfernbar ist, nachdem die Schieber 42 geschlossen sind, damit die Anordnung 29 in den Stempel 32 einbringbar ist.

Es sei hier ausdrücklich festgehalten, dass der Stempel 32 nur eine einzige Aufwärtsbewegung sowie nur eine einzige Abwärtsbewegung in die dargestellte Position und/oder Grundposition ausführt.

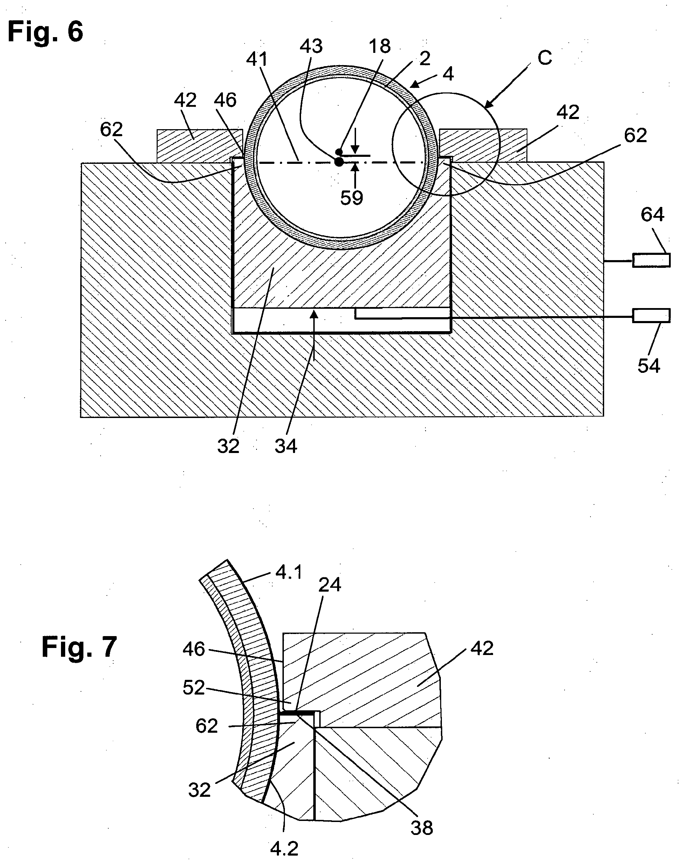

In Fig. 6 sowie dem vergrößerten Detail C der Fig. 7 ist nach einem weiteren Verfahrensschritt die Position des Stempels 32 und des Bauteils 2 und der umgebenden Isolierung 4 dargestellt. Die Schieber 42 befinden sich unverändert in der gleichen Position wie anhand von Fig. 3 und Fig. 5 erläutert. Der Stempel 32 ist in Richtung des Pfeiles 34 mit einem Hub 59 verschoben, wobei dessen Eckbereiche und/oder Randteile 62 in die Ausnehmungen 48 der Schieber 42 gedrückt wurden und somit gedrückt sind. Der Hub 59 ist kurz und/oder unter Einbeziehung der Dicke der Stege 14, 16 und des Stegteils 24 im Wesentlichen gleich der Höhe 50 der Ausnehmung 48, wie anhand von Fig. 4 erläutert. Infolge der Bewegung des Stempels 32 wurde der äußere Teil 24 vollständig umgebogen und an den Schieber 42 im Bereich dessen Ausnehmung 48 gepresst. Der jeweilige in Fig. 1 gut erkennbare erste Steg 14 ist somit zwischen dem radialen Teil 22 des zweiten Stegs 16 und dessen nunmehr umgebogenen äußeren Teil eingeklemmt und/oder eingepresst, und somit ist eine funktionssichere und/oder dauerhaft feste Falz-Verbindung der Formteile 4.1 und 4.2 der Isolierung 4 geschaffen.

Weiterhin ist in bevorzugter Weise eine Schweißvorrichtung 64 vorgesehen und/oder der Vorrichtung zugeordnet. Die Schweißvorrichtung 64, welche bevorzugt die Herstellung von Punktschweißverbindungen ermöglicht, dient in vorteilhafter Weise zur Verbindung wenigstens eines Endes der Isolierung 4 mit dem Bauteil 2. Alternativ oder zusätzlich kann mittels der Schweißvorrichtung 64 nach Herstellung der Falz-Verbindung der Falz in zweckmäßiger Weise auch verschweißt werden, wodurch in vorteilhafter Weise die Dauerhaltbarkeit, Lebensdauer, Festigkeit usw. der Falz-Verbindung weiter optimiert wird.

Nachfolgend wird das Verfahren näher erläutert. Zunächst wird die als Formkörper ausgebildete Isolierung 4 außen auf dem Bauteil 2 angeordnet, wobei die einander zugeordneten und miteinander zu verbindenden Stege 14, 16 aneinander gelegt werden. Die Sicherungsvorrichtung 58 wurde zuvor und/oder ist nunmehr derart von dem Bereich oberhalb des Stempels 32 wegbewegt, um das Einbringen der Anordnung 29 in die Ausnehmung des Stempels 32 zu ermöglichen. Nachfolgend wird die Anordnung 29, nämlich das Bauteil 2 mit der dieses umgebenden Isolierung 4, in die angepasste Ausnehmung 36 des Stempels 32 der Vorrichtung eingelegt, wobei nur ein Teil des Bauteils 2 und der Isolierung 4, sich in der genannten Ausnehmung 36 befindet und wobei die Stege 14, 16 wenigstens einem Schieber 42 der Vorrichtung zugeordnet werden. In einem weiteren Verfahrensschritt wird der Schieber 42 in Richtung auf das Bauteil 2 mit der umgebenden Isolierung 4 bewegt, wobei der äußere Teil 24 des Steges 16 von dem Eckbereich 52 des Schiebers 42 bzw. dessen Vorderfläche 46 in Richtung zur Isolierung 4 gebogen wird und in die Ausnehmung 48 des Schiebers 42 geschoben wird und hierbei den genannten ersten Steg 14 der Isolierung 4 übergreift. In einem nachfolgenden Schritt wird der Stempel 32 in Richtung zum Schieber 42 nach oben bewegt, und zwar derart, dass der äußere Teil 24 des zweiten Stegs 16 vollständig umgebogen wird, und der erste Steg 14 zwischen dem radialen Teil 22 des zweiten Stegs 16 und dessen umgebogenen äußeren Teil 24 fest und dauerhaft eingeklemmt und verpresst wird und somit die Falz-Verbindung hergestellt ist. Anschließend wird der Stempel 32 in die Grundposition gemäß Fig. 2 nach unten zurückbewegt und ferner werden der oder die Schieber 42 in ihre Grundpositionen gemäß Fig. 2 ebenfalls zurückgefahren. Schließlich kann die Anordnung 29 aus der erfindungsgemäßen Vorrichtung herausgenommen werden.

### Bezugszeichenliste

2 Bauteil
4 Isolierung
4.1, 4.2 Formteil/Halbschale
6 Dämmmaterial
8 Folie
10 Innenkontur von 4
12 Außenkontur von 2
14 erster Steg von 4.1
16 zweiter Steg von 4.2
18 Längsachse/Achse von 2
20 Breite von 14
22 radialer Teil von 16
24 äußerer Teil von 16
26 Breite von 22
28 Höhe von 24
29 Anordnung
30 Grundkörper
32 Stempel
34 Pfeil/Bewegungsrichtung von 32
36 Ausnehmung in 32
38 Oberfläche/Auflagefläche von 32
40 Oberfläche von 30
41 Ebene
42 Schieber
43 Längsachse/Achse von 36
44 Pfeil
45 Führungselement/Lagerung von 42
46 Vorderfläche von 42
48 Ausnehmung in 42
50 Höhe von 48
52 Eckbereich von 42, 46
54 Antriebseinheit von 32
56 Antriebseinheit von 42
58 Sicherungsvorrichtung
59 Hub
60 Kopplungseinrichtung
62 Kante/Eckbereich von 32
64 Schweißvorrichtung

## Patentansprüche

1. Vorrichtung zur Herstellung einer Anordnung, welche ein Bauteil (2) mit einer Isolierung (4) enthält, wobei die Isolierung (4) eine Folie (8), insbesondere aus Edelstahl, und in wenigstens einem Bereich an einander zugeordneten Kanten miteinander zu einer Falz-Verbindung verbindbare Stege (14, 16) aufweist, wobei die Vorrichtung einen Grundkörper (30) mit einer Oberfläche (40) enthält, ferner eine an einen Teil der Außenkontur des Bauteils (2) oder der Isolierung (4) angepasste Ausnehmung (36) enthält, in welche das Bauteil (2) mit der diese umgebenden Isolierung (4) einbringbar ist, und weiterhin einen bewegbar angeordneten Stempel enthält,
**dadurch gekennzeichnet, dass** der Stempel (32) im Grundkörper (30) aus einer Grundposition vertikal nach oben bewegbar gelagert ist und die Ausnehmung (36) sowie eine als Auflagefläche für die Stege (14, 16) ausgebildete Oberfläche (38) aufweist,
und dass wenigstens ein integrierter und bezüglich des Grundkörpers (30) bewegbarer Schieber (42) vorgesehen und derart den Stegen (14, 16) zugeordnet ist, dass durch Bewegen des oder der Schieber (42) in Richtung zur Isolierung (4) und ferner durch Bewegen des Stempels (32) aus der Grundposition in Richtung (34) nach oben die Falz-Verbindung der Isolierung (4) herstellbar ist.

2. Vorrichtung nach Anspruch 1, **dadurch gekennzeichnet, dass** die Ausnehmung (36) des Stempels (32) an der Oberfläche (38) endet, und/oder dass an die Oberfläche (38) des Stempels (32) die Oberfläche (40) des Grundkörpers (30) direkt radial nach außen in der Grundposition anschließt und/oder dass in der Grundposition des Stempels (32) die Oberfläche (38) sich in dergleichen, insbesondere horizontalen, Ebene (41) befindet, in welcher ferner die Oberfläche (40) des Grundkörpers (30) liegt.

3. Vorrichtung nach Anspruch 1 oder 2, **dadurch gekennzeichnet, dass** der Schieber (42) eine nach unten offene Ausnehmung (48) aufweist, in welche die Stege (14, 16) und ein äußerer Teil (24) des Stegs (16) nach der Bewegung des Schiebers (42) zur Isolierung (4) eingreifen.

4. Vorrichtung nach einem der Ansprüche 1 bis 3, **dadurch gekennzeichnet, dass** der Stempel (32) aus der Grundposition mit einem Hub (59) nach oben bewegbar ist, wobei der Hub (59) kurz und/oder im Wesentlichen gleich groß ist wie die Höhe (50) der Ausnehmung (48) des Schiebers (42) unter Einbeziehung der Dicke der Stege (14, 16) und des Stegteils (24).

5. Vorrichtung nach einem der Ansprüche 1 bis 4, **dadurch gekennzeichnet, dass** die Vorrichtung als ein handhabbares und/oder transportables und/oder autonomes Tischgerät ausgebildet ist und derart auf einem Tisch oder einer Werkbank oder einem Gestell oder dergleichen anordenbar ist, dass die Oberfläche (40) des Grundkörpers (30) im Wesentlichen horizontal ausgerichtet ist.

6. Vorrichtung nach einem der Ansprüche 1 bis 5, **dadurch gekennzeichnet, dass** mittels des Stempels (32) aus der Grundposition eine einzige Aufwärtsbewegung und eine einzige Abwärtsbewegung durchführbar sind, und/oder dass die Aufwärtsbewegung des Stempels (32) zur Positionierung vor den oder die seitlichen Schieber (42) durchführbar ist, und/oder dass der oder die seitlichen Schieber (42) bevorzugt gleich anschließend an die Aufwärtsbewegung radial nach innen in Richtung zur Isolierung (4) und/oder der Längsachse (18) bewegbar sind.

7. Vorrichtung nach einem der Ansprüche 1 bis 6, **dadurch gekennzeichnet, dass** der genannte erste Steg (14), bezogen auf eine Längsachse (18) des Bauteils (2) und/oder der Anordnung (29), im Wesentlichen radial nach außen gerichtet ist, und dass der genannte zweite Steg (16) einen, ebenfalls im Wesentlichen radial nach außen gerichteten, Teil (22) und ferner einen von diesem in Richtung zu dem vorgenannten ersten Steg (14) gerichteten äußeren Teil (24) aufweist, wobei der erste Steg (14) am radialen Teil (22) des zweiten Stegs (16) zur Anlage bringbar ist, und/oder dass der Schieber (42) eine, den genannten Stegen (14, 16) zugeordnete, Ausnehmung (48) derart aufweist, dass durch die Bewegung des Schiebers (42) der äußere Teil (24) des Steges (16) teilweise umbiegbar ist und in der Ausnehmung (48) schiebbar ist.

8. Vorrichtung nach einem der Ansprüche 1 bis 7, **dadurch gekennzeichnet, dass** der Stempel (32) und das von der Isolierung (4) umgebene Bauteil (2) in Richtung zur Längsachse (18) bewegbar sind, und/oder dass eine Oberfläche (38) des Stempels (32) in die Ausnehmung (48) des Schiebers (42) eingreifen kann, wobei der äußere Teil (24) des Steges (16) derart biegbar ist, dass der zugeordnete erste Steg (14) zwischen dem radialen Teil (22) des zweiten Stegs (16) und dessen äußeren (24) einklemmbar ist und verpressbar ist.

9. Vorrichtung nach einem der Ansprüche 1 bis 8, **dadurch gekennzeichnet, dass** dem oder den Schiebern (42) Antriebseinheiten (56) zugeordnet sind, mittels welchen die genannte Bewegung in Richtung auf die Längsachse (18) und/oder die Isolierung (4) durchführbar ist und nach der Herstellung der Falz-Verbindung wieder in eine Grundposition zurückführbar ist, wobei die Antriebseinrichtung (56) pneumatisch oder hydraulisch betätigbar ist, oder dass mittels manuell betätigbaren Elementen, wie Hebel und/oder Gestängen, die Bewegung des oder der Schieber (42) durchführbar ist.

10. Vorrichtung nach einem der Ansprüche 1 bis 9, **dadurch gekennzeichnet, dass** zur Bewegung des Stempels (32) eine Antriebseinheit (54) vorgesehen ist, mittels welcher die Bewegung des Stempels (32) sowie dessen Zurückbewegung in die Grundposition durchführbar ist, wobei die Antriebseinheit (54) bevorzugt pneumatisch oder hydraulisch betätigbar ist.

11. Vorrichtung nach einem der Ansprüche 1 bis 10, dadurch gekennzeichet, dass die Bewegung des Stempels (32) in einem vorgegebenen Winkel, welcher bevorzugt zumindest näherungsweise 90° beträgt, zur Bewegungsrichtung (44) des oder der Schieber (42) durchführbar ist.

12. Vorrichtung nach einem der Ansprüche 1 bis 11, **dadurch gekennzeichnet, dass** eine Schweißvorrichtung (64) vorgesehen ist, mittels welcher, insbesondere durch Punktschweißen, wenigstens ein Ende der Isolierung (4) mit dem Bauteil (2) verbindbar ist und/oder die Falz-Verbindung verschweißbar ist.

13. Verfahren zur Herstellung einer Anordnung, welche ein Bauteil (2) mit einer Isolierung (4) enthält, insbesondere mit der Vorrichtung nach wenigstens einem der Ansprüche 1 bis 12, **dadurch gekennzeichnet, dass** zunächst die als Formkörper ausgebildete Isolierung (4) außen auf das Bauteil (2) aufgebracht wird, wobei die einander zugeordneten und miteinander zu verbindenden Stege (14, 16) in Anlage gebracht werden, dass nachfolgend das Bauteil (2) zusammen mit der umgebenden Isolierung (4) zumindest teilweise in die angepasste Ausnehmung (36) des Stempels (32) eingebracht wird, dass in einem weiteren Verfahrensschritt der wenigstens eine Schieber (42) in Richtung auf das Bauteil (2) und die umgebende Isolierung (4) bewegt wird, wobei der äußere Teil (24) des Steges (16) von einem Eckbereich (52) des Schiebers (4) in Richtung zur Isolierung (4) gebogen und in eine Ausnehmung (48) des Schiebers (42) geschoben wird, und dass in einem nachfolgenden Verfahrensschritt der Stempel (32) nach oben in Richtung zum Schieber (42) derart bewegt wird, dass der äußere Teil (24) des zweiten Stegs (16) vollständig umgebogen wird, wobei der erste Steg (14) zwischen dem radialen Teil (22) des zweiten Stegs (16) und dessen umgebogenem äußeren Teil (24) dauerhaft eingeklemmt und verpresst wird.

14. Verfahren nach Anspruch 13, **dadurch gekennzeichnet, dass** mittels einer Schweißvorrichtung (64) wenigstens ein Ende der Isolierung (4), insbesondere durch Punktschweißen, mit dem Bauteil (2) verbunden wird und/oder dass der mittels der Stege (14, 16) hergestellte Falz mittels der Schweißvorrichtung (64) verbunden wird.

## Claims

1. A device for producing an assembly which contains a component (2) with an insulation (4), wherein the insulation (4) is a foil (8), more particularly made of stainless steel, and in at least one area at edges assigned to each other has webs (14, 16) which can be combined with each other to form a folded connection, wherein the device contains a basic body (30) with a surface (40), also contains a recess (36), adapted to part of the outer contour of the component (2) or the insulation (4), into which the component (2) can be introduced with the insulation (4) surrounding it, and also contains a moveably arranged stamp,
**characterised in that** the stamp (32) in the basic body (30) can be moved from a basic position vertically upwards and comprises the recess (36) as well as a surface (38) designed as a support surface for the webs (14, 16),
and **in that** at least one integrated pusher (42), which is movable with regard to the basic body (30) is provided and assigned to the webs (14, 16) in such a way that through moving the pusher (42) in the direction of the insulation (4) and also through moving the stamp (32) out of the basic position in the upward direction (34) the folded connection of the insulation (4) can be produced.

2. The device according to claim 1, **characterised in that** the recess (36) of the stamp (32) ends on the surface (38), and/or **in that** the surface (38) of the stamp (32) adjoins the surface (40) of the basic body (30) directly radially outwards in the basic position and/or **in that** in the basic position of the stamp (32) the surface (38) is in the same, more particularly horizontal, plane (41) in which the surface of (40) of the basic body (30) also lies.

3. The device according to claim 1 or 2, **characterised in that** the pusher (42) has a recess (48) which is open downwards into which the webs (14, 16) and an outer part (24) of the web (16) engage after movement of the pusher (42) towards the insulation (4).

4. The device according to any one of claims 1 to 3, **characterised in that** the stamp (32) can be moved from a basic position upwards with a lift movement (59), wherein the lift movement (59) is short and/or essentially equal to the height (50) of the recess (48) of the pusher (42) including the thickness of the webs (14, 16) and of the web part (24).

5. The device according to any one of claims 1 to 4, **characterised in that** the device is designed as an easy to handle and/or transportable and/or autonomous table-top device and can be arranged on a table or a work bench or a frame or suchlike in such a way that the surface (40) of the basic body (30) is essentially horizontally aligned.

6. The device according to any one of claims 1 to 5, **characterised in that** by way of the stamp (32), from the basic position a single upward movement and a single downward movement can be carried out, and/or that the upward movement of the stamp (32) can be carried out to position it before the lateral pusher(s) (42) and/or **in that** the lateral pusher(s) (32) is/are preferably moveable immediately subsequent to the upward movement radially inwards in the direction of the insulation (4) and/or the longitudinal axis (18).

7. The device according to any one of claims 1 to 6, **characterised in that** in relation to a longitudinal axis (18) of the component (2) and/or the assembly (29) said first web (14) is essentially aligned radially outwards, and **in that** said second web (16) has an outer part (22), also aligned essentially radially outwards, and also an outer part (24) directed therefrom in the direction of said first web (14), wherein the first web (14) can be brought into contact on the radial part (22) of the second (16), and/or **in that** the pusher (42) has a recess (48) assigned to said webs (14, 16) in such a way that through the movement of the pusher (42) the outer part (24) of the web (16) is partially bendable and can be inserted into the recess (48).

8. The device according to any one of claims 1 to 7, **characterised in that** the stamp (32) and the component (2) surrounded by the insulation (4) can be moved in the direction of the longitudinal axis (18) and/or **in that** a surface (38) of the stamp (32) engages in the recess (48) of the pusher (42), wherein the outer part (24) of the web (16) can be moved in such a way that the assigned first web (14) can be clamped and pressed between the radial part (22) of the second web (16) and its outer part (24).

9. The device according to any one of claims 1 to 8, **characterised in that** the pusher(s) (42) is/are allocated actuating units (56) by means of which said movement in the direction of the longitudinal axis (18) and/or the insulation (4) can be carried out and after production of the folded connection can be returned to a basic position, wherein the actuating device (56) can be pneumatically or hydraulically operated, or **in that** the movement of the pusher(s) (42) can be carried out by means of manually operable elements, such as levers and/or rods.

10. The device according to any one of claims 1 to 9, **characterised in that** to move the stamp (32) an actuating unit (54) is provided by means of which the movement of the stamp (32) as well as its return movement to the basis position can be carried out, wherein the actuating unit (54) is preferably pneumatically or hydraulically operated.

11. The device according to any one of claims 1 to 10, **characterised in that** the movement of the stamp (32) can be carried out at a predetermined angle, which is preferably at least approximately 90° to the direction of movement (44) of the pusher(s) (42).

12. The device according to any one of claims 1 to 11, **characterised in that** a welding device (64) is provided by means of which, in particular through point welding, at least one end of the insulation (4) can be combined with the component (2) and/or the fold connection is weldable.

13. A method of producing a device which contains a component (2) with an insulation (4), more particularly with the device according to at least one of claims 1 to 12, **characterised in that** initially the insulation (4) in the form of moulded body is applied externally to the component (2), wherein the webs (14, 16) which are assigned to each other and are to be connected to each other are brought into contact with each other , **in that** subsequently the component (2) together with the surrounding insulation (4) is at least partially introduced into the adapted recess (36) of the stamp (32), **in that** in a further processing step the at least one pusher (42) is moved in the direction of the component (2) and the surrounding insulation (4), wherein the outer part (24) of the web (16) is bent by a corner area (52) of the pusher (42) in the direction of the insulation (4) and pushed into a recess (48) of the pusher (42), and **in that** in a subsequent processing step the stamp (32) is moved upwards in the direction of the pusher (42) in such a way that the outer part (24) of the second web (16) is completely bent over, wherein the first web (14) is durably clamped and pressed between the radial part (22) of the second web (16) and its bent-over outer part (24).

14. The method according to claim 13, **characterised in that** by means of a welding device (64) at least one end of the insulation (4) can be connected with the component (2), in particular by means of point welding and/or **in that** the fold produced by way of the webs (14, 16) can be connected by means of the welding device (64).

## Revendications

1. Dispositif destiné à créer un agencement, lequel contient un élément constitutif (2) doté d'une isolation (4), l'isolation (4) comportant un film (8), notamment en acier inoxydable et dans au moins une zone, sur des arêtes mutuellement associées, des barrettes (14, 16) susceptibles d'être assemblées ensemble en un assemblage par agrafage, le dispositif contenant un corps de base (30) avec une surface (40), par ailleurs un évidement (36) adapté à une partie du contour extérieur de l'élément constitutif (2) ou à l'isolation (4) dans lequel l'élément constitutif (2) avec l'isolation (4) qui l'entoure peut être introduit et en outre un poinçon placé en étant mobile,
**caractérisé en ce que** le poinçon (32) est logé dans le corps de base (30) en étant mobile à partir d'une position de base, à la verticale vers le haut et comporte l'évidement (36) ainsi qu'une surface (38) conçue en tant que surface d'appui pour les barrettes (14, 16),
et **en ce qu'**au moins un coulisseau (42) intégré et mobile par rapport au corps de base (30) est prévu et associé aux barrettes (14, 16) de telle sorte que par déplacement du ou des coulisseau(x) (42) dans la direction de l'isolation (4) et en outre par déplacement du poinçon (32) à partir de la position de base dans la direction (34) vers le haut, l'assemblage par agrafage de l'isolation (4) soit réalisable.

2. Dispositif selon la revendication 1, **caractérisé en ce que** l'évidement (36) du poinçon (32) se termine sur la surface (38) et/ou **en ce que** sur la surface (38) du poinçon (32), la surface (40) du corps de base (30) se raccorde directement en direction radiale vers l'extérieur dans la position de base et/ou **en ce que** dans la position de base du poinçon (32), la surface (38) se trouve dans le même plan (41), notamment horizontal dans lequel se situe en outre la surface (40) du corps de base (30).

3. Dispositif selon la revendication 1 ou 2, **caractérisé en ce que** le coulisseau (42) comporte un évidement (48) ouvert vers le bas, dans lequel les barrettes (14, 16) et une partie extérieure (24) de la barrette (16) s'engagent après le déplacement du coulisseau(42) vers l'isolation (4).

4. Dispositif selon l'une quelconque des revendications 1 à 3, **caractérisé en ce que** le poinçon (32) est déplaçable à partir de la position de base avec une levée (59) vers le haut, la levée (59) étant courte et/ou sensiblement identique à la hauteur (50) de l'évidement (48) du coulisseau (42), en incluant l'épaisseur des barrettes (14, 16) et de la partie de barrette (24).

5. Dispositif selon l'une quelconque des revendications 1 à 4, **caractérisé en ce que** le dispositif est conçu en tant qu'un appareil de table manipulable et/ou transportable et/ou autonome et peut se placer sur une table ou un établi ou un châssis ou similaires de sorte que la surface (40) du corps de base (30) soit sensiblement orientée à l'horizontale.

6. Dispositif selon l'une quelconque des revendications 1 à 5, **caractérisé en ce qu'**au moyen du poinçon (32), à partir de la position de base, il peut se réaliser un unique déplacement vers le haut et un unique déplacement vers le bas, et/ou **en ce que** le déplacement vers le haut du poinçon (32) est réalisable pour le positionnement à l'avant du ou des coulisseau(x) (42) latéraux, et/ou **en ce que** le ou les coulisseau(x) (42) latéraux sont déplaçables de préférence immédiatement à la suite du déplacement vers le haut en direction radiale vers l'intérieur vers l'isolation (4) et/ou l'axe longitudinal (18).

7. Dispositif selon l'une quelconque des revendications 1 à 6, **caractérisé en ce que** la première barrette (14) citée est dirigée sensiblement en direction radiale vers l'extérieur, en rapport à un axe longitudinal (18) de l'élément constitutif (2) et/ou de l'agencement (29) et la deuxième barrette (16) citée comporte une partie (22) également dirigée sensiblement en direction radiale vers l'extérieur et par ailleurs une partie extérieure (24) dirigée à partir de cette dernière dans la direction de la première barrette (14) citée, la première barrette (14) pouvant être amenée en appui sur la partie radiale (22) de la deuxième barrette (16) et/ou **en ce que** le coulisseau (42) comporte un évidement (48) associé aux barrettes (14, 16) citées, de telle sorte que par le déplacement du coulisseau (42), la partie extérieure (24) de la barrette (16) soit en partie cintrable et puisse être poussée dans l'évidement (48).

8. Dispositif selon l'une quelconque des revendications 1 à 7, **caractérisé en ce que** le poinçon (32) et l'élément constitutif (2) entouré par l'isolation (4) sont déplaçables en direction de l'axe longitudinal (18) et/ou **en ce qu'**une surface (38) du poinçon (32) peut s'engager dans l'évidement (48) du coulisseau (42), la partie extérieure (24) de la barrette (16) étant cintrable de telle sorte que la première barrette (14) associée puisse être coincée et compressée entre la partie radiale (22) de la deuxième barrette (16) et sa partie extérieure (24).

9. Dispositif selon l'une quelconque des revendications 1 à 8, **caractérisé en ce qu'**au ou aux coulisseau(x) (42) sont associées des unités d'entraînement (56) à l'aide desquelles le déplacement cité dans la direction de l'axe longitudinal (18) et/ou de l'isolation (4) est réalisable et après la création de l'agrafage peut être ramené dans la position de base, le dispositif d'entraînement (56) étant à manoeuvre pneumatique ou hydraulique ou **en ce qu'**au moyen d'éléments à manoeuvre manuelle, tels que des leviers et/ou des tringleries, le déplacement du ou des coulisseau(x) (42) est réalisable.

10. Dispositif selon l'une quelconque des revendications 1 à 9, **caractérisé en ce que** pour déplacer le poinçon (32), il est prévu une unité d'entraînement (54) au moyen de laquelle le déplacement du poinçon (32) ainsi que son retour en arrière dans la position de base est réalisable, l'unité d'entraînement (54) étant de préférence à manoeuvre pneumatique ou hydraulique.

11. Dispositif selon l'une quelconque des revendications 1 à 10, **caractérisé en ce que** le déplacement du poinçon (32) est réalisable dans un angle prédéfini, lequel est de préférence d'au moins approximativement 90° par rapport à la direction de déplacement (44) du ou des coulisseaux(x) (42).

12. Dispositif selon l'une quelconque des revendications 1 à 11, **caractérisé en ce qu'**il est prévu un dispositif de soudage (64) au moyen duquel notamment par soudage par points, au moins une extrémité de l'isolation (4) peut être assemblée avec l'élément constitutif (2) et/ou l'assemblage par agrafage peut être soudé.

13. Procédé destiné à fabriquer un agencement, lequel contient un élément constitutif (2) avec une isolation (4), notamment à l'aide du dispositif selon au moins l'une quelconque des revendications 1 à 12, **caractérisé en ce qu'**on applique d'abord l'isolation (4) conçue en tant que corps moulé à l'extérieur sur l'élément constitutif (2), les barrettes (14, 16) mutuellement associées et devant être assemblées ensemble étant amenées en appui, **en ce qu'**ensuite on introduit l'élément constitutif (2) en commun avec l'isolation (4) qui l'entoure au moins en partie dans l'évidement (36) adapté du poinçon (32), **en ce que** dans une étape de procédé suivante, on déplace l'au moins un coulisseau (42) dans la direction de l'élément constitutif (2) et de l'isolation (4) qui l'entoure, la partie extérieure (24) de la barrette (16) étant cintrée d'une zone angulaire (52) du coulisseau (42) en direction de l'isolation (4) et poussée dans un évidement (48) du coulisseau (42) et **en ce que** dans une étape de procédé suivante, on déplace le poinçon (32) vers le haut, dans la direction du coulisseau (42), de sorte que la partie extérieure (24) de la deuxième barrette (16) soit complètement cintrée, la première barrette (14) étant coincée durablement et compressée entre la partie radiale (22) de la deuxième barrette (16) et sa partie extérieure (24) cintrée.

14. Procédé selon la revendication 13, **caractérisé en ce qu'**au moyen d'un dispositif de soudage (64), on assemble au moins une extrémité de l'isolation (4), notamment par soudage par points avec l'élément constitutif (2) et/ou **en ce qu'**on assemble l'agrafage créé au moyen des barrettes (14, 16) au moyen du dispositif de soudage (64)
